# EUROPEAN PATENT APPLICATION

(11) **EP 2 746 616 A2**
(43) Date of publication of application: **25.06.2014**
(21) Application number: 13198349.6
(22) Date of filing: 19.12.2013
(51) Int. Cl.: F16F 9/46, F16F 9/18

(54) **Shock absorber**

(30) Priority: 20.12.2012 JP 2012278331
(71) Applicant: Yamaha Motor Hydraulic System Kabushiki Kaisha, Shuchi-gun, Shizuoka 437-0223 (JP)
(72) Inventor: Fukuda, Hiromi, Shuchi-gun, Shizuoka 437-0223 (JP)
(74) Representative: Stöckeler, Ferdinand

(57) **Abstract**

A shock absorber includes: a cylinder body including a cylinder part having a cylindrical shape, a cap part that covers an opening of the cylinder part at one end thereof, and a head part that covers an opening of the cylinder part at the other end thereof, the cylinder body having an internal space defined by the cylinder part, the cap part, and the head part; a piston part that partitions the internal space of the cylinder body such that the cylinder body has a first chamber and a second chamber, the first chamber being configured to have a high pressure at a time of extension of the shock absorber, the second chamber being configured to have a high pressure at a time of compression of the shock absorber; a piston rod part fixed to the piston part, the piston rod part extending through the other end of the cylinder part to the outside of the cylinder body; and a base valve part arranged in the internal space of the cylinder body, the base valve part being positioned at a side close to the cap part relative to the piston part. The piston part is provided with an extension damping valve for generating an extension damping force, the extension damping valve being configured to permit a working fluid flowing from the first chamber toward the second chamber to flow only in a single direction. The base valve part is provided with a compression damping valve for generating a compression damping force, the compression damping valve being configured to permit a working fluid flowing from the second chamber toward the cap-part side of the base valve part to flow only in a single direction. A first check valve is not provided in the piston part but provided outside the internal space of the cylinder body, the first check valve being configured to permit a working fluid flowing into the first chamber in a compression stroke to flow only in a single direction. A second check valve is provided in at least one of the base valve part and the outside of the internal space of the cylinder body, the second check valve being configured to permit a working fluid flowing into the second chamber in an extension stroke to flow only in a single direction.

## Description

### [TECHNICAL FIELD]

The present invention relates to a shock absorber.

### [BACKGROUND ART]

In an automobile, a motorcycle, or the like, a shock absorber (buffer) is generally provided for damping vibrations caused in a vehicle. The shock absorber normally includes a cylinder. A piston and a piston rod that supports the piston are arranged in the cylinder. The interior of the cylinder is divided into two oil chambers by the piston. The piston moves in association with extension or contraction of the shock absorber, and thereby oil moves between the two oil chambers. An orifice, a valve, or the like, that defines a fluid passage with a relatively narrow passage area, is arranged in a path of movement of the oil. The orifice, the valve, or the like, serves as a damping force generation part. A flow resistance occurring when the oil passes through the fluid passage having such a small area is used to generate a damping force, for damping vibrations caused in the vehicle.

Examples of a conventional shock absorber include a double-cylinder shock absorber disclosed in Patent Document 1.

In the double-cylinder shock absorber of the Patent Document 1, a cylinder is provided within an outer cylinder. A space between the outer cylinder and the cylinder is used as a reservoir. A piston arranged within the cylinder partitions the interior of the cylinder into an upper oil chamber and a lower oil chamber. The piston is coupled to one end of a piston rod that is received in the cylinder.

A main extension cushion valve and a check valve are provided to the piston. The main extension cushion valve limits a flow of oil (working fluid) from the upper oil chamber to the lower oil chamber, thereby generating an extension damping force for damping the piston rod relative to the outer cylinder. The main extension control valve does not permit a working fluid to flow in a direction from the lower oil chamber to the upper oil chamber. The check valve permits a working fluid to flow only in the direction from the lower oil chamber to the upper oil chamber.

A main retraction cushion valve and a check valve are provided to a bottom wall (base valve) of the cylinder. The main retraction cushion valve limits a flow of oil (working fluid) from the lower oil chamber to the reservoir, thereby generating a compression damping force for damping the piston rod relative to the outer cylinder. The main retraction cushion valve does not permit a working fluid to flow in a direction from the reservoir to the lower oil chamber. The check valve permits a working fluid to flow only in the direction from the reservoir to the lower oil chamber.

A bypass that bypasses both of the cushion valves is provided between the upper oil chamber and the lower oil chamber. A bypass that bypasses both of the cushion valves is also provided between the lower oil chamber and the reservoir. A flow control valve is provided in each of the bypasses.

Examples of the conventional shock absorber also include a single-cylinder shock absorber.

In the single-cylinder shock absorber, the interior of a reservoir is pressurized by a gas. A damping valve mounted to a piston generates a damping force. This allows reduction in the rate (contribution rate) at which the base valve contributes to generation of a damping force, or allows omission of the base valve.

Examples of the conventional shock absorber further include a shock absorber disclosed in Patent Document 2.

In the shock absorber of the Patent Document 2, a solid piston (i.e., a non-hollow piston) is arranged in a cylinder. The solid piston partitions the interior of the cylinder into a cap-side chamber and a head-side chamber. A compression damping valve and an extension damping valve are provided to a cap part.

In compression of the shock absorber, a working fluid discharged from the cap-side chamber flows through the compression damping valve into the head-side chamber. A working fluid, whose amount corresponds to the volume of a piston rod having entered the cylinder, flows to a reservoir.

In extension of the shock absorber, a working fluid discharged from the head-side chamber flows through the extension damping valve into the cap-side chamber. Additionally, a working fluid, whose amount corresponds to the volume of the piston rod having exited the cylinder, is supplied from the reservoir to the cap-side chamber.

### [PRIOR ART DOCUMENTS]

### [PATENT DOCUMENTS]

[Patent Document 1] Japanese Examined Patent Publication No. S60-21259 (1985)
[Patent Document 2] Japanese Patent Application Laid-Open No. H6-221365 (1994)

### [SUMMARY OF THE INVENTION]

### [PROBLEMS TO BE SOLVED BY THE INVENTION]

In the double-cylinder shock absorber of the Patent Document 1, a working fluid whose amount mainly corresponds to the volume of entry of the piston rod into the cylinder is discharged from the lower oil chamber into the reservoir through the main retraction cushion valve of the base valve. At this time, internal pressure of the cylinder rises, and this pressure is received by the piston rod. Thus, in the double-cylinder shock absorber of the Patent Document 1, the relationship of [compression damping force = internal pressure of cylinder × cross-sectional area of piston rod] is established.

The cross-sectional area of the piston rod is smaller than the cross-sectional area of the cylinder. That is, the amount of oil contained in the cylinder having a high pressure is large. Therefore, compression properties of a hydraulic oil are highly influential. As a result, generation of the damping force is delayed relative to the speed of the piston. Thus, responsiveness is lowered. The double-cylinder shock absorber of the Patent Document 1 is not completely satisfactory in terms of achievement of both comfort in riding and running performance.

In the single-cylinder shock absorber described above, it is likely that compression properties of a hydraulic oil are highly influential even when the contribution rate of the base valve is reduced, because the internal pressure of the cylinder is high similarly to the double-cylinder shock absorber. Additionally, because of the pressurization made by the gas, a gas reaction force occurs in the piston rod. The gas reaction force varies depending on the position of stroke of the piston and a temperature change. Therefore, stabilizing the comfort in riding and the running performance is difficult. In a case where the piston rod is coupled to a vehicle with interposition of a rubber mount, a problem arises that deformation of the rubber mount further deteriorates the comfort in riding.

In the shock absorber of the Patent Document 2, the relationship of [compression damping force = internal pressure of cylinder ×cross-sectional area of solid piston] is established. Accordingly, in the shock absorber of the Patent Document 2, unlike in the shock absorber of the Patent Document 1, a pressure-receiving area for the compression damping force is large. Therefore, the shock absorber of the Patent Document 2 is not likely to receive an influence from compression properties of a hydraulic oil.

However, in the shock absorber of the Patent Document 2, the compression damping valve and the extension damping valve are provided to the cap part, which results in an increase in the entire length of the cap part or an increase in the size of the cap part itself. This causes a problem in terms of mountability of the shock absorber to a vehicle.

In order to avoid impairing the mountability, it is conceivable to downsize the valve. However, adoption of a small-size valve may cause an excessive increase in the damping force in a case where the speed of movement of the piston is high and the flow rate of the hydraulic oil is high. As a result, it is difficult to improve the comfort in riding.

The present invention is accomplished in view of the problems described above. An object of the present invention is to provide a shock absorber that is able to satisfy both comfort in riding and running performance at a higher level than conventional, with ensuring of mountability to a vehicle.

### [MEANS FOR SOLVING THE PROBLEMS]

To solve the problems described above, the present invention adopts the following configurations.
(1) A shock absorber including:
   a cylinder body including a cylinder part having a cylindrical shape, a cap part that covers an opening of the cylinder part at one end thereof, and a head part that covers an opening of the cylinder part at the other end thereof, the cylinder body having an internal space defined by the cylinder part, the cap part, and the head part;
   a piston part that partitions the internal space of the cylinder body such that the cylinder body has a first chamber and a second chamber, the first chamber being configured to have a high pressure at a time of extension of the shock absorber, the second chamber being configured to have a high pressure at a time of compression of the shock absorber;
   a piston rod part fixed to the piston part, the piston rod extending through the head part to the outside of the cylinder body; and
   a base valve part arranged in the internal space of the cylinder body, the base valve part being positioned at a side close to the cap part relative to the piston part,
   the piston part being provided with an extension damping valve for generating an extension damping force, the extension damping valve being configured to permit a working fluid flowing from the first chamber toward the second chamber to flow only in a single direction,
   the base valve part being provided with a compression damping valve for generating a compression damping force, the compression damping valve being configured to permit a working fluid flowing from the second chamber toward the cap-part side of the base valve part to flow only in a single direction,
   a first check valve being not provided in the piston part but provided outside the internal space of the cylinder body, the first check valve being configured to permit a working fluid flowing into the first chamber in a compression stroke to flow only in a single direction,
   a second check valve being provided in at least one of the base valve part and the outside of the internal space of the cylinder body, the second check valve being configured to permit a working fluid flowing into the second chamber in an extension stroke to flow only in a single direction.

In a configuration of (1), the first check valve is not provided to the piston part. Therefore, in the compression stroke of the shock absorber, the cross-sectional area of the piston part serves as a pressure-receiving area for the compression damping force. In this case, as compared with a case where only the piston rod part is used to generate the compression damping force, the compression damping force can be generated even under a state where the pressure of the internal space of the cylinder body is low. In other words, the compression damping force can be generated with suppression of a rise in the internal pressure of the cylinder body. This makes it less likely that compression properties of the working fluid exert an influence. Accordingly, even an increased compression damping force can be generated with a high responsiveness.

The first check valve is not provided to the piston part. Therefore, the extension damping valve provided to the piston part can be increased in size. That is, the circumferential length of the extension damping valve can be increased. This can reduce a distance (i.e., a valve lift) over which the extension damping valve is opened. As a result, the responsiveness of opening/closing of the extension damping valve is improved.

The compression damping valve and the extension damping valve are provided in the internal space of the cylinder body, and not provided outside the internal space of the cylinder body. In this case, as compared with a case where the compression damping valve and the extension damping valve are provided outside the internal space of the cylinder body, the compression damping valve and the extension damping valve can be increased in size. That is, the circumferential lengths of the compression damping valve and the extension damping valve can be increased. As a result, the responsiveness of opening/closing of the compression damping valve and the extension damping valve is improved. Additionally, a size increase of the compression damping valve and the extension damping valve can reduce a resistance occurring in the compression damping valve and the extension damping valve at a time when the flow rate of the working fluid is high (at a time when the speed of movement of the piston part is high). Thus, it is easy to achieve both comfort in riding and running performance.

Since it is not necessary to increase gas pressure in the internal space of the cylinder body, an influence received from a gas reaction force occurring in the piston rod part is small. Therefore, the position of stroke of the piston part and a temperature change are less influential. Thus, it is easy to stabilize the comfort in riding and the running performance.

The fluid passage including the extension damping valve, through which a larger amount of fluid flows during the extension stroke, does not go through the outside of the internal space of the cylinder body. This enables a reduction in a passage resistance in the extension damping valve. Therefore, an excessive increase in the extension damping force can be suppressed when the flow rate of the working fluid is high.

The compression damping valve and the extension damping valve are provided in the internal space of the cylinder body, and not provided outside the internal space of the cylinder body. This enables downsizing of the cap part. As a result, mountability of the shock absorber is improved. This also contributes to a reduction in the manufacturing cost.

As thus far described, the configuration of (1) is able to satisfy both the comfort in riding and the running performance at a higher level than conventional, with ensuring of the mountability to a vehicle.
(2) The shock absorber according to (1), wherein
   the second check valve, a first flow control valve and a second flow control valve are provided outside the internal space of the cylinder body,
   the first flow control valve is arranged in parallel with the first check valve,
   the second flow control valve is arranged in parallel with the second check valve.

In a configuration of (2), the first flow control valve and the second flow control valve are provided outside the internal space of the cylinder body. This makes it easy to access the first flow control valve and the second flow control valve, with obtaining of the effects exerted by the configuration of (1).

The second check valve is not provided to the base valve part. Therefore, the compression damping valve provided to the base valve part can be increased in size. That is, the circumferential length of the compression damping valve can be increased. This can reduce a distance (i.e., a valve lift) over which the compression damping valve is opened. As a result, the responsiveness of opening/closing of the compression damping valve is improved.
(3) The shock absorber according to (2), wherein
   the first flow control valve and the second flow control valve are electronically-controlled flow control valves.

In a configuration of (3), a flow rate control can be performed with a high accuracy and a high responsiveness by means of an electronic control.
(4) The shock absorber according to any one of (1) to (3), wherein
   the cap part is a cylindrical member, the cap part having an open end at a side close to the cylinder part and a closed end at a side opposite to the cylinder part,
at least the cap-part-side portion of the base valve part is arranged in an internal space of the cap part,
   the outer diameter of the portion of the base valve part arranged in the internal space of the cap part is larger than the inner diameter of the cylinder part.

A configuration of (4) allows the compression damping valve provided to the base valve part to be increased in size. Accordingly, the responsiveness of opening/closing of the compression damping valve can be further improved.
(5) The shock absorber according to (4), wherein
   the outer diameter of the compression damping valve is larger than the inner diameter of the cylinder part.

A configuration of (5) allows the compression damping valve provided to the base valve part to be further increased in size. Accordingly, the responsiveness of opening/closing of the compression damping valve can be still further improved.

### [EFFECTS OF THE INVENTION]

A shock absorber of the present invention is able to satisfy both comfort in riding and running performance at a higher level than conventional, with ensuring of mountability to a vehicle.

These and other objects, features, aspects and advantages of the present invention will become more apparent from the following detailed description, which, taken in conjunction with the accompanying drawings, discloses some embodiments of the present invention.

### [BRIEF DESCRIPTION OF THE DRAWINGS]

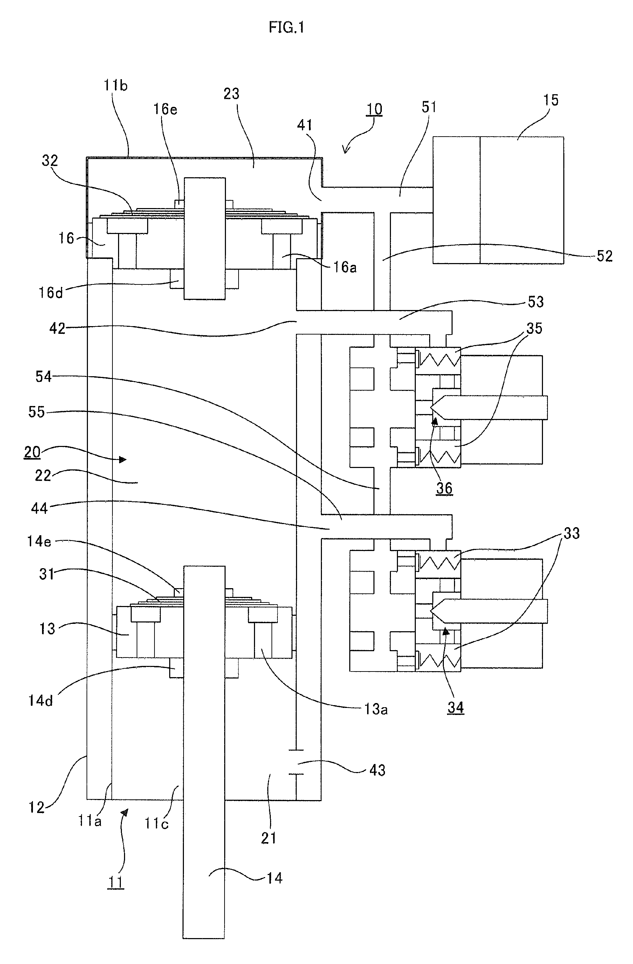

[FIG. 1] A vertical cross-sectional view schematically showing a shock absorber according to a first embodiment.

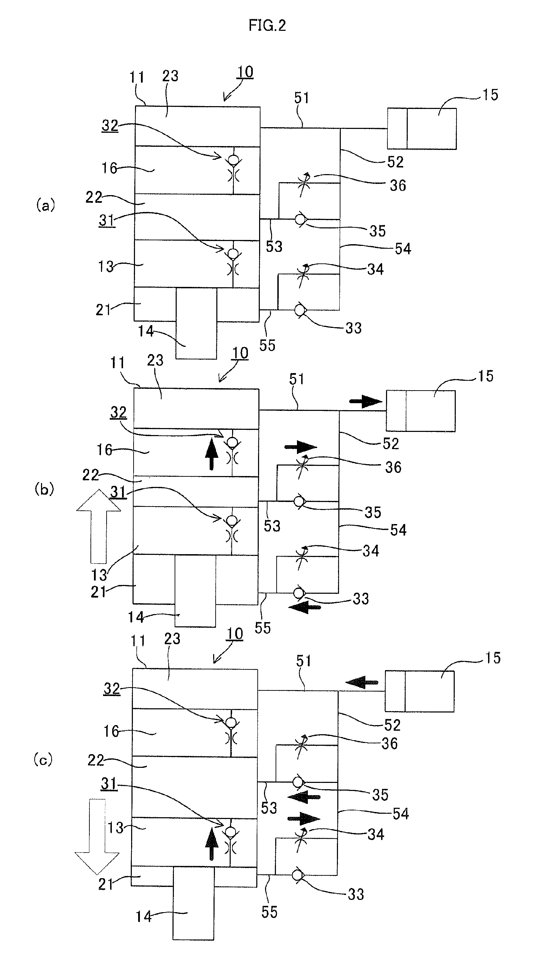

[FIG. 2] (a) is a circuit diagram showing a hydraulic circuit of the shock absorber shown in FIG. 1; (b) is a diagram showing a flow of a working fluid at a time of compression in the circuit of (a); and (c) is a diagram showing a flow of a working fluid at a time of extension in the circuit of (a).

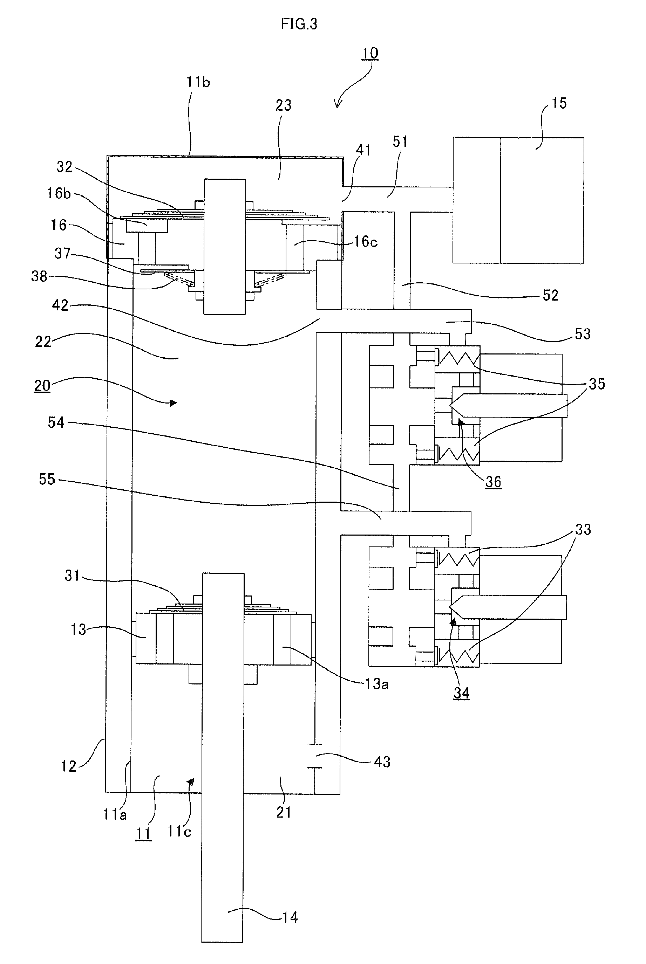

[FIG. 3] A vertical cross-sectional view schematically showing a shock absorber according to a second embodiment.

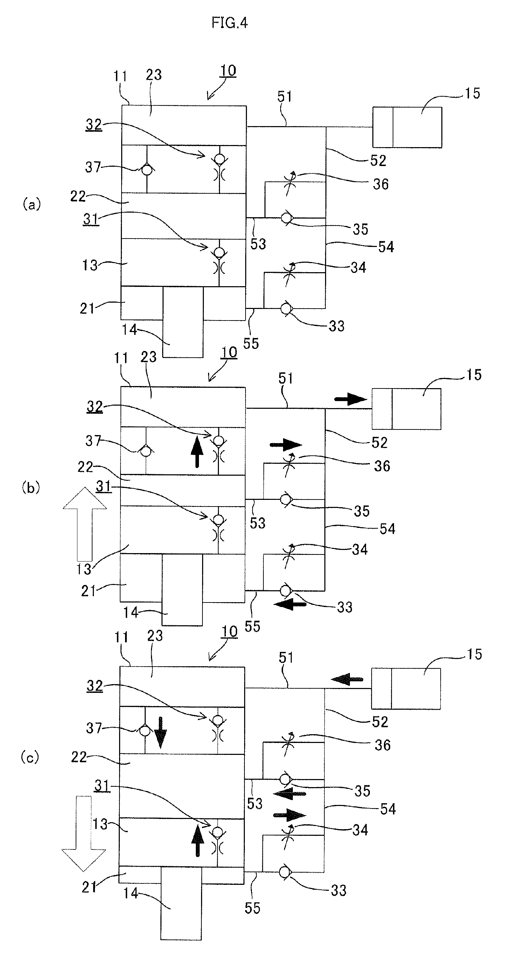

[FIG. 4] (a) is a circuit diagram showing a hydraulic circuit of the shock absorber shown in FIG. 3; (b) is a diagram showing a flow of a working fluid at a time of compression in the circuit of (a); and (c) is a diagram showing a flow of a working fluid at a time of extension in the circuit of (a).

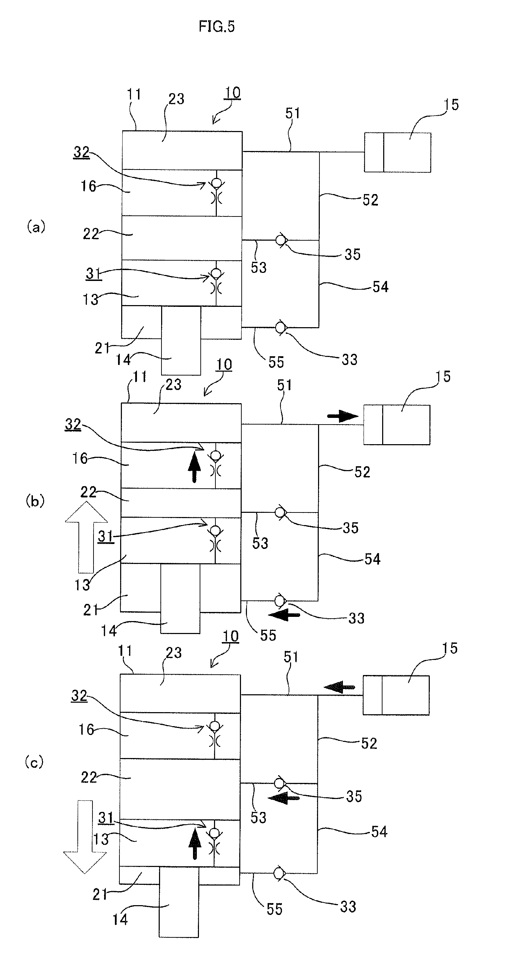

[FIG. 5] (a) is a circuit diagram showing a hydraulic circuit of a shock absorber according to a third embodiment; (b) is a diagram showing a flow of a working fluid at a time of compression in the circuit of (a); and (c) is a diagram showing a flow of a working fluid at a time of extension in the circuit of (a).

### [EMBODIMENTS FOR CARRYING OUT THE INVENTION]

Hereinafter, some embodiments will be described with reference to the drawings.
A shock absorber 10, which will be described in first to third embodiments below, is configured such that an extension damping valve 31 and a compression damping valve 32 are provided to a piston part 13 and a base valve part 16, respectively. A first check valve 33 that permits a working fluid flowing toward a first chamber 21 to flow only in a single direction during a compression stroke, is not provided to the piston part 13, but provided in the outside of an internal space 20 of a cylinder body 11.

### <First Embodiment>

FIG. 1 is a vertical cross-sectional view schematically showing a shock absorber according to a first embodiment.
FIG. 2(a) is a circuit diagram showing a hydraulic circuit of the shock absorber shown in FIG. 1. FIG. 2(b) is a diagram showing a flow of a working fluid at a time of compression in the circuit shown in FIG. 2(a). FIG. 2(c) is a diagram showing a flow of a working fluid at a time of extension in the circuit shown in FIG. 2(a). In FIG. 2, the black arrows indicate a direction in which the working fluid flows, and white arrows indicate a direction in which the piston moves. The same applies to other figures.

The shock absorber 10 includes a cylinder body 11, an outer cylinder 12, a piston part 13, a piston rod part 14, a reservoir 15, and a base valve part 16.

The cylinder body 11 includes a cylinder part 11a having a cylindrical shape, a cap part 11b that covers an opening formed at one end of the cylinder part 11a, and a head part 11c that covers an opening formed at the other end of the cylinder part 11 a. The cylinder part 11a, the cap part 11b, and the head part 11c define an internal space 20 of the cylinder body 11. The cap part 11b has an open end at the side close to the cylinder part 11 a, and a closed end at the side opposite to the cylinder part 11 a. The open end of the cap part 11b opens toward the cylinder part 11a. The cap part 11b is a cylindrical member. The cap part 11b is a cylindrical member having a bottom. The inner diameter of the cap part 11b is larger than the inner diameter of the cylinder part 11a. The shape of the cap part 11b is not limited to the example illustrated herein. For example, a plate member, a bowl-shaped member, or the like, is also adoptable as the cap part 11b. The head part 11c is a plate member having a through hole for receiving the piston rod part 14. No particular limitation is put on the head part 11c, as long as it has a shape that is able to cover the opening formed at the other end of the cylinder part 11 a. In this embodiment, the internal space 20 includes a space existing radially inward of the cylinder part 11 a and a space existing radially inward of the cap part 11b. It should be noted that providing a valve to the cap part 11b itself and providing a valve to an internal space of the cap part 11b are different in concept.

The outer cylinder 12 is a cylindrical member provided radially outward of the cylinder part 11a. An annular space extending in an axial direction of the cylinder body 11 is formed between the cylinder part 11a and the outer cylinder 12. The annular space is used as a working-fluid passage. The shock absorber 10 is a double-cylinder shock absorber. It may be possible that the shock absorber 10 is a single-cylinder shock absorber. The shock absorber 10 includes the reservoir 15, which will be described later, arranged outside the outer cylinder 12. Here, the annular space formed between the cylinder body 11 and the outer cylinder 12 may be used as the reservoir 15.

The piston part 13 is arranged inside the cylinder body 11. The piston part 13 is arranged inside the cylinder part 11a. The piston part 13 has an annular shape that follows an inner wall of the cylinder body 11. The piston part 13 has a through hole in a radially central portion thereof. The piston rod part 14, which will be described later, is received in the through hole. The piston rod part 14 is fixed to the piston part 13. The piston part 13 is movable together with the piston rod part 14 in the axial direction of the cylinder body 11. The piston part 13 is configured to move to and fro in the axial direction of the cylinder body 11 at a location between the cap part 11b and the head part 11c.

The piston part 13 partitions the interior of the cylinder body 11. Thereby, the cylinder body 11 includes a first chamber 21 and a second chamber 22. Pressure in the first chamber 21 rises at a time of extension of the shock absorber 10. Pressure in the second chamber 22 rises at a time of compression of the shock absorber 10. The first chamber 21 and the second chamber 22 are filled with a working fluid (for example, a hydraulic oil).

The piston rod part 14 is a column-shaped member (solid member having a column-like shape) extending in the axial direction of the cylinder body 11. In this embodiment, the outer diameter of the piston rod part 14 is constant throughout its length in the axial direction of the cylinder body 11. The piston rod part 14, which is fixed to the piston part 13, extends through the head part 11c to the outside of the cylinder body 11. More specifically, the piston rod part 14 extends through the through hole of the head part 11c to the outside of the cylinder body 11. The piston rod part 14 has nuts 14d and 14e that are arranged spaced apart in the axial direction of the cylinder body 11. The piston rod part 14 has a threaded groove (not shown) formed on an outside circumferential surface thereof. The piston part 13 and the extension damping valve 31 which will be described later are sandwiched between the nuts 14d and 14e, and thereby fixed to the piston rod part 14. A method for fixing the piston part 13 and the extension damping valve 31 to the piston rod part 14 is not limited to this example, and a conventionally known method is adoptable.

The cross-sectional area of the piston rod part 14 is smaller than the cross-sectional area of the piston part 13. For example, the radius of the piston rod part 14 is less than 1/2 of the radius of the piston part 13. The cross-sectional area of the piston rod part 14 is less than 1/4 of the cross-sectional area of the piston part 13. In the shock absorber 10, the cross-sectional area of the piston part 13 is a pressure-receiving area for an extension damping force. The area obtained as a result of addition of the cross-sectional area of the piston rod part 14 to the cross-sectional area of the piston part 13 is a pressure-receiving area for a compression damping force. Accordingly, as a difference between the cross-sectional area of the piston rod part 14 and the cross-sectional area of the piston part 13 increases, a difference between the pressure-receiving area for the compression damping force and the pressure-receiving area for the extension damping force decreases. This can reduce a difference between damping force characteristics at a time of compression and damping force characteristics at a time of extension. The "cross-sectional area" as used herein means the area of a cross-section as sectioned in a direction perpendicular to the axial direction of the cylinder body 11.

A portion of the piston rod part 14 extending out of the cylinder body 11 is, for example, attached to a vehicle body (not shown) of a vehicle. A portion of the cylinder body 11 at the side close to the cap part 11b is, for example, attached to a wheel (not shown) of the vehicle.

The reservoir 15 is provided outside the cylinder body 11. The base valve part 16 is arranged in the internal space 20 of the cylinder body 11, and positioned at the side close to the cap part 11b relative to the piston part 13. In this embodiment, the base valve part 16 is a plate member having an annular shape. The base valve part 16 has a hole in a radially central portion thereof. A bolt 16d is received in the hole. The bolt 16d is fitted in a nut 16e. The base valve part 16 and the compression damping valve 32 are arranged between the bolt 16d and the nut 16e. The bolt 16d and the nut 16e are fastened to each other, so that the compression damping valve 32, which will be described later, is fixed to the base valve part 16. A method for fixing the base valve part 16 and the compression damping valve 32 to each other is not limited to this example, and a conventionally known method is adoptable.

The base valve part 16 is arranged so as to span both the space existing radially inward of the cylinder part 11a and the space existing radially inward of the cap part 11b. It may be acceptable that the base valve part 16 is arranged only in the space existing radially inward of the cylinder part 11 a, or only in the space existing radially inward of the cap part 11b. At least a portion of the base valve part 16 at the side close to the cap part 11b is positioned in the internal space of the cap part 11b (the space existing radially inward of the cap part 11b). A part of an outer surface of the base valve part 16 positioned in the internal space of the cap part 11b is in contact with an inner surface of the cap part 11b. A sealing member is interposed between the outer surface of the base valve part 16 and the inner surface of the cap part 11b.

The base valve part 16 is not movable within the cylinder body 11. The base valve part 16 partitions a fluid passage between the second chamber 22 and the reservoir 15 into a second chamber 22 side and a reservoir 15 side. Thereby, a third chamber 23 is provided in the cylinder body 11. The third chamber 23 is provided in the side close to the cap part 11b (the side where the piston rod part 14 does not extend) relative to the base valve part 16. Thus, the interior of the cylinder body 11 is partitioned into the first chamber 21, the second chamber 22, and the third chamber 23, by the piston part 13 and the base valve part 16. A port 41 is provided on an outer wall of the cylinder body 11 at the side close to the cap part 11b relative to the base valve part 16 (an outer wall of the third chamber 23). A fluid passage 51 extending from the port 41 to the outside of the cylinder body 11 is connected to the reservoir 15. The shock absorber 10 includes the third chamber 23 arranged in a working-fluid passage extending to the reservoir 15 from the base valve part 16 at the side close to the cap part 11b, but the third chamber 23 may not be indispensable. It may be also acceptable that an exit of the base valve part 16 at the side close to the cap part 11b is directly connected to the port 41.

The piston part 13 is provided with the extension damping valve 31 for generating an extension damping force. The extension damping valve 31 includes a plurality of leaf valves (shims). Each of the leaf valves is an annular plate (for example, made of a metal) having flexibility. The piston rod part 14 extends through a hole formed in a radially central portion of each of the leaf valves. The piston part 13 has a fluid passage hole 13a. The fluid passage hole 13a allows a working fluid to pass therethrough. The fluid passage hole 13a penetrates through the piston part 13 in the axial direction of the cylinder body 11. The number of the fluid passage holes 13a may be either one or more. The extension damping valve 31 is fixed in contact with a flat surface of the piston part 13 at the side close to the cap part 11b. When the piston part 13 stops, the extension damping valve 31 closes the fluid passage hole 13a. At a time of extension of the shock absorber 10, a working fluid contained in the first chamber 21 passes through the fluid passage hole 13a, so that the extension damping valve 31 is bent toward the second chamber 22 side to bring the fluid passage hole 13a and the second chamber 22 into communication with each other, and thus the working fluid flows into the second chamber 22. At this time, a portion at which the fluid passage hole 13a communicates with the second chamber 22 serves as an orifice. A flow passage resistance occurring at the orifice causes the extension damping valve 31 to generate an extension damping force. The extension damping valve 31 permits the working fluid to flow therethrough only in an extension stroke. The extension damping valve 31 does not permit the working fluid to flow in a direction from the second chamber 22 to the first chamber 21. The number of leaf valves constituting the extension damping valve 31 is not particularly limited, and for example, a single leaf valve may be adoptable. The piston part 13 does not include a check valve that permits the working fluid to flow in the direction from the second chamber 22 to the first chamber 21 in a compression stroke.

The base valve part 16 is provided with the compression damping valve 32 for generating a compression damping force. The compression damping valve 32 includes a plurality of leaf valves. Each of the leaf valves is an annular plate having flexibility. The base valve part 16 has a fluid passage hole 16a. The fluid passage hole 16a penetrates through the base valve part 16 in the axial direction of the cylinder body 11. The outer diameter of the compression damping valve 32 is larger than the outer diameter of the extension damping valve 31. The outer diameter of the compression damping valve 32 is larger than the inner diameter of the cylinder part 11 a. The outer diameter of the compression damping valve 32 is smaller than the inner diameter of the cap part 11b.

The compression damping valve 32 is in contact with a surface of the base valve part 16 at the side close to the cap part 11b. When the piston part 13 stops, the compression damping valve 32 closes the fluid passage hole 16a. At a time of compression of the shock absorber 10, a working fluid contained in the second chamber 22 passes through the fluid passage hole 16a, so that the compression damping valve 32 is bent toward the third chamber 23 side to bring the fluid passage hole 16a and the third chamber 23 into communication with each other, and thus the working fluid flows into the third chamber 23. At this time, a portion at which the fluid passage hole 16a communicates with the third chamber 23 serves as an orifice. A flow passage resistance occurring at the orifice causes the compression damping valve 32 to generate a compression damping force. The compression damping valve 32 permits the working fluid to flow therethrough only in the compression stroke. The compression damping valve 32 does not permit the working fluid to flow in a direction from the third chamber 23 to the second chamber 22. The number of leaf valves constituting the compression damping valve 32 is not particularly limited, and for example, a single leaf valve may be adoptable.

The fluid passage 51 is connected to a fluid passage 52, at a position between the reservoir 15 and a portion (in this embodiment, the third chamber 23) of the cylinder body 11 at the side close to the reservoir 15 relative to the base valve part 16. The fluid passage 52 is connected to the fluid passage 51, and also connected to a second check valve 35 and a second flow control valve 36. The second check valve 35 and the second flow control valve 36 are arranged in parallel (see FIG. 2(a)). The second check valve 35 and the second flow control valve 36 are connected to the second chamber 22 via a fluid passage 53. The fluid passage 53 is connected to a port 42 that is formed on a wall surface of the second chamber 22.
In other words, the fluid passages 51, 52, and 53 constitute a bypass that allows, without interposition of the compression damping valve 32, communication between the second chamber 22 and the portion (in this embodiment, the third chamber 23) of the cylinder body 11 at the side close to the reservoir 15 relative to the base valve part 16. The second check valve 35 and the second flow control valve 36 arranged in parallel with each other are provided in the bypass. It suffices that the fluid passage 52 is connected at a position close to the reservoir 15 relative to the base valve part 16. For example, the fluid passage 52 may be connected to the reservoir 15.

The second check valve 35, which is provided outside the cylinder body 11, is arranged in the fluid passages 51, 52, and 53 that extend to the second chamber 22 from the portion (in this embodiment, the third chamber 23) close to the reservoir 15 relative to the base valve part 16. The second check valve 35 is arranged between the fluid passages 52 and 53 as shown in FIG.1 and FIG. 2(a) to (c). The second check valve 35 permits the working fluid flowing toward the second chamber 22 to flow only in a single direction. Therefore, the second check valve 35 allows the working fluid coming from the portion (in this embodiment, the third chamber 23) close to the reservoir 15 relative to the base valve part 16, from the reservoir 15, or from the first chamber 21, to flow to the second chamber 22 with substantially no resistance (see FIG. 2(c)). A flow of the working fluid passing through the second check valve 35 toward the second chamber 22 is a free flow. At this time, the second check valve 35 causes substantially no damping force. The second check valve 35 does not permit the working fluid to flow in the reverse direction (see FIG. 2(b)).

The second flow control valve 36, which is provided outside the cylinder body 11, is arranged in the fluid passages 51, 52, and 53 that extend to the second chamber 22 from the portion (in this embodiment, the third chamber 23) close to the reservoir 15 relative to the base valve part 16. The second flow control valve 36 is arranged in parallel with the second check valve 35. The second flow control valve 36 is arranged in parallel with the second check valve 35 and at a location between the fluid passages 52 and 53 as shown in FIG.1 and FIG. 2(a) to (c). The second flow control valve 36 adjusts the aperture of the fluid passage, and thereby adjusts the flow rate of the working fluid.
The second flow control valve 36 is arranged in parallel with the second check valve 35. Normally, the working fluid coming from the portion (in this embodiment, the third chamber 23) close to the reservoir 15 relative to the base valve part 16, from the reservoir 15, or from the first chamber 21, passes through the second check valve 35 and does not pass through the second flow control valve 36 (see FIG. 2(c)), while the working fluid coming from the second chamber 22 does not pass through the second check valve 35 and passes through the second flow control valve 36 (see FIG. 2(b)).

A fluid passage 54 is connected to the fluid passage 52, and also connected to a first check valve 33 and a first flow control valve 34. The first check valve 33 and the first flow control valve 34 are arranged in parallel (see FIG. 2(a)). The first check valve 33 and the first flow control valve 34 are connected to the first chamber 21 via a fluid passage 55. To be specific, the fluid passage 55 is connected to the first chamber 21 via a port 44 formed on an outer wall of the outer cylinder 12, the space formed between the cylinder part 11a and the outer cylinder 12, and a port 43 formed on an outer wall of the cylinder part 11a.
In other words, the fluid passages 51, 52, 54, and 55 constitute a bypass that allows, without interposition of the extension damping valve 31 and the compression damping valve 32, communication between the first chamber 21 and the portion (in this embodiment, the third chamber 23) close to the reservoir 15 relative to the base valve part 16. The first check valve 33 and the first flow control valve 34 arranged in parallel with each other are provided in the bypass.

The first check valve 33, which is provided outside the cylinder body 11, is arranged in the fluid passages 51, 52, 54, and 55 that extend to the first chamber 21 from the portion (in this embodiment, the third chamber 23) close to the reservoir 15 relative to the base valve part 16. The first check valve 33 is arranged between the fluid passages 54 and 55 as shown in FIG.1 and FIG. 2(a) to (c). The first check valve 33 permits the working fluid flowing toward the first chamber 21 to flow only in a single direction. Therefore, the first check valve 33 allows the working fluid coming from the portion (in this embodiment, the third chamber 23) close to the reservoir 15 relative to the base valve part 16, from the reservoir 15, or from the second chamber 22, to flow to the first chamber 21 with substantially no resistance (see FIG. 2(b)). A flow of the working fluid passing through the first check valve 33 toward the first chamber 21 is a free flow. At this time, the first check valve 33 causes substantially no damping force. The first check valve 33 does not permit the working fluid to flow in the reverse direction (see FIG. 2(c)).

The first flow control valve 34, which is provided outside the cylinder body 11, is arranged in the fluid passages 51, 52, 54, and 55 that extend to the first chamber 21 from the portion (in this embodiment, the third chamber 23) close to the reservoir 15 relative to the base valve part 16. The first flow control valve 34 is arranged in parallel with the first check valve 33. The first flow control valve 34 is arranged in parallel with the first check valve 33 and at a location between the fluid passages 54 and 55 as shown in FIG.1 and FIG. 2(a) to (c). The first flow control valve 34 adjusts the aperture of the fluid passage, and thereby adjusts the flow rate of the working fluid.
The first flow control valve 34 is arranged in parallel with the first check valve 33. Normally, the working fluid coming from the portion (in this embodiment, the third chamber 23) close to the reservoir 15 relative to the base valve part 16, from the reservoir 15, or from the second chamber 22, passes through the first check valve 33 and does not pass through the first flow control valve 34 (see FIG. 2(b)), while the working fluid coming from the first chamber 21 does not pass through the first check valve 33 and pass through the first flow control valve 34 (see FIG. 2(c)).

The extension damping valve 31 and the compression damping valve 32 are configured such that, when the piston part 13 stops, the extension damping valve 31 and the compression damping valve 32 are closed, and when the piston part 13 moves, the extension damping valve 31 and the compression damping valve 32 are opened in accordance with a change in pressure of the working fluid.

During extension of the shock absorber 10, as the speed of movement of the piston part 13 increases, the extension damping force generated by the extension damping valve 31 increases. As the speed of movement of the piston part 13 increases, a distance (i.e., a valve lift) over which the extension damping valve 31 is opened increases so that the function as an orifice deteriorates. As a result, under a situation where the speed of movement of the piston part 13 is high, the rate of increase in the damping force relative to increase in the speed of movement of the piston part 13 is lowered. During compression of the shock absorber 10, as the speed of movement of the piston part 13 increases, the compression damping force generated by the compression damping valve 32 increases. Therefore, in the compression damping valve 32, similarly to in the extension damping valve 31, the rate of increase in the damping force relative to increase in the speed of movement of the piston part 13 is lowered. Thus, an increase in the distance over which the extension damping valve 31 and the compression damping valve 32 are opened makes the generation of the damping force less easy.

In the shock absorber 10, however, the first check valve 33 is not provided to the piston part 13 and the second check valve 35 is not provided to the base valve part 16. This allows the circumferential lengths of the extension damping valve 31 and the compression damping valve 32 to be increased. In such a configuration, the distance over which each of the extension damping valve 31 and the compression damping valve 32 is opened is short. Accordingly, the responsiveness of opening/closing of the extension damping valve 31 and the compression damping valve 32 is improved. Each of the extension damping valve 31 and the compression damping valve 32, which are within the cylinder body 11, is not arranged in parallel with a valve that controls the flow rate.

Next, the compression stroke will be described. In the compression stroke of the shock absorber 10, as shown in FIG. 2(b), the piston part 13 moves toward the second chamber 22 side, so that the volume of the second chamber 22 decreases. In contrast, the volume of the first chamber 21 increases.

In the compression stroke, the following relationship is established:
the amount of volume decrease in the second chamber 22 = ΔP; and
the amount of volume increase in the first chamber 21 = ΔP-ΔR,
   where ΔP(m³) represents the volume of the piston part 13(includes the piston rod part 14 which is inserted into the piston part 13) having entered the second chamber 22, and ΔR(m³) represents the volume of the piston rod part 14 having entered the cylinder body 11.

In the compression stroke, therefore, a working fluid whose amount corresponds to ΔP is discharged from the second chamber 22 to the outside of the second chamber 22 through the compression damping valve 32 and the second flow control valve 36. When the working fluid passes through the compression damping valve 32 and the second flow control valve 36, the pressure in the second chamber 22 rises so that the compression damping force is generated.

A working fluid whose amount corresponds to ΔP-ΔR flows into the first chamber 21 through the first check valve 33. A flow of the working fluid passing through the first check valve 33 is a free flow. The first check valve 33 causes no compression damping force. A working fluid whose amount corresponds to ΔR flows into the reservoir 15 and the first chamber 21.

Next, the extension stroke will be described. In the extension stroke of the shock absorber 10, as shown in FIG. 2(c), the piston part 13 moves toward the first chamber 21 side, so that the volume of the first chamber 21 decreases. In contrast, the volume of the second chamber 22 increases.

Assuming that the amount of movement of the piston in the extension stroke is equal to that in the compression stroke; in the extension stroke, the volume of the piston part 13(includes the piston rod part 14 which is inserted into the piston part 13) entering the first chamber 21 is ΔP(m³) and the volume of the piston rod part 14 exiting the cylinder body 11 is ΔR(m³). In the extension stroke, the following relationship is established:
the amount of volume decrease in the first chamber 21 = ΔP-ΔR; and
the amount of volume increase in the second chamber 22 = ΔP.

In the extension stroke, therefore, a working fluid whose amount corresponds to ΔP-ΔR flows from the first chamber 21 to the second chamber 22 through the extension damping valve 31 and the first flow control valve 34. The working fluid having passed through the first flow control valve 34 flows into the second chamber 22 through the second check valve 35. When the working fluid passes through the extension damping valve 31 and the first flow control valve 34, the pressure in the first chamber 21 rises so that the extension damping force is generated.

A working fluid whose amount corresponds to ΔR flows from the reservoir 15 into the second chamber 22 through the second check valve 35. A flow of the working fluid passing through the second check valve 35 is a free flow. The second check valve 35 causes no extension damping force.

The first flow control valve 34 and the second flow control valve 36 are electronically-controlled flow control valves. Each of the first flow control valve 34 and the second flow control valve 36 adjusts the aperture of the fluid passage, and thereby adjusts the flow rate of the working fluid, in accordance with a control signal supplied from the outside (for example, from a controller provided in the vehicle). The first flow control valve 34 and the second flow control valve 36 are not limited to this example, and it may be also acceptable that the aperture of the fluid passage is adjusted by hand. The first flow control valve 34 and the second flow control valve 36 are configured such that the aperture does not change in accordance with the pressure of the working fluid. Each of the first flow control valve 34 and the second flow control valve 36, which are in the outside of the cylinder body 11, is not arranged in parallel with a damping valve (a compression damping valve or an extension damping valve) for causing a damping force.

In the shock absorber 10, a total amount of the working fluid discharged from the second chamber 22 through the compression damping valve 32 in the compression stroke contributes to generation of the compression damping force, and a total amount of the working fluid discharged from the first chamber 21 through the extension damping valve 31 in the extension stroke contributes to generation of the extension damping force. In the shock absorber 10, the first check valve 33 and the second check valve 35 are provided separately and independently. The first check valve 33 permits the working fluid to flow only toward the first chamber 21 at a time of compression. The second check valve 35 permits the working fluid to flow only toward the second chamber 22 at a time of extension. Since the flowing working fluid is distributed between the check valves, the amount of the working fluid flowing through each of the check valves is reduced. This enables suppression of an excessive increase in the aperture of each check valve. As a result, the responsiveness of opening/closing of the check valve can be improved. Besides, each of the check valves can be downsized.

In the shock absorber 10 of this embodiment described above, the first check valve 33 is not provided to the piston part 13. Therefore, in the compression stroke of the shock absorber 10, the area obtained as a result of addition of the cross-sectional area of the piston rod part 14 to the cross-sectional area of the piston part 13 serves as the pressure-receiving area for the compression damping force. In this case, as compared with a case where only the piston rod part 14 is used to generate the compression damping force, the compression damping force can be generated even under a state where the pressure of the internal space of the cylinder body 11 is low. In other words, the compression damping force can be generated with suppression of a rise in the internal pressure of the cylinder body 11. This makes it less likely that compression properties of the working fluid exert an influence. Accordingly, even an increased compression damping force can be generated with a high responsiveness.

The first check valve 33 is not provided to the piston part 13. Therefore, the extension damping valve 31 provided to the piston part 13 can be increased in size. That is, the circumferential length of the extension damping valve 31 can be increased. This can reduce the distance (i.e., a valve lift) over which the extension damping valve 31 is opened. As a result, the responsiveness of opening/closing of the extension damping valve 31 is improved.

The second check valve 35 is not provided to the base valve part 16. Therefore, the compression damping valve 32 provided to the base valve part 16 can be increased in size. That is, the circumferential length of the compression damping valve 32 can be increased. This can reduce the distance (i.e., a valve lift) over which the compression damping valve 32 is opened. As a result, the responsiveness of opening/closing of the compression damping valve 32 is improved.

The compression damping valve 32 and the extension damping valve 31 are provided in the internal space 20 of the cylinder body 11, and not provided outside the internal space 20 of the cylinder body 11. In this case, as compared with a case where the compression damping valve 32 and the extension damping valve 31 are provided outside the internal space 20 of the cylinder body 11, the compression damping valve 32 and the extension damping valve 31 can be increased in size. That is, the circumferential lengths of the compression damping valve 32 and the extension damping valve 31 can be increased. As a result, the responsiveness of opening/closing of the compression damping valve 32 and the extension damping valve 31 is improved. Additionally, a size increase of the compression damping valve 32 and the extension damping valve 31 can reduce a resistance occurring in the compression damping valve 32 and the extension damping valve 31 at a time when the flow rate of the working fluid is high (at a time when the speed of movement of the piston part 13 is high). Thus, it is easy to achieve both comfort in riding and running performance.

Since it is not necessary to increase gas pressure in the internal space 20 of the cylinder body 11, an influence received from a gas reaction force occurring in the piston rod part 14 is small. Therefore, the position of stroke of the piston part 13 and a temperature change are less influential. Thus, it is easy to stabilize the comfort in riding and the running performance.

The fluid passage including the extension damping valve 31, through which a larger amount of fluid flows during the extension stroke, does not go through the outside of the internal space 20 of the cylinder body 11. This enables a reduction in the passage resistance in the extension damping valve 31. Therefore, an excessive increase in the extension damping force can be suppressed when the flow rate of the working fluid is high.

The compression damping valve 32 and the extension damping valve 31 are provided in the internal space 20 of the cylinder body 11, and not provided outside the internal space 20 of the cylinder body 11. This enables downsizing of the cap part 11b. As a result, the mountability of the shock absorber 10 is improved. This also contributes to a reduction in the manufacturing cost.

As thus far described, the shock absorber 10 of this embodiment is able to satisfy both the comfort in riding and the running performance at a higher level than conventional, with ensuring of the mountability to a vehicle.

Providing the first flow control valve 34 and the second flow control valve 36 outside the internal space 20 of the cylinder body 11 makes it easy to access the first flow control valve 34 and the second flow control valve 36. Moreover, the first flow control valve 34 and the second flow control valve 36 are electronically-controlled flow control valves, which are able to perform a flow rate control with a high accuracy and a high responsiveness.

In the shock absorber 10, the outer diameter of the base valve part 16 arranged in the internal space of the cap part 11b is larger than the inner diameter of the cylinder part 11a. This allows the circumferential length of the base valve part 16 to be increased. As a result, the responsiveness of opening/closing of the compression damping valve 32 is further improved. Furthermore, since the outer diameter of the compression damping valve 32 is larger than the inner diameter of the cylinder part 11a, the responsiveness of opening/closing of the compression damping valve 32 is further improved.

### <Second Embodiment>

FIG. 3 is a vertical cross-sectional view schematically showing a shock absorber according to a second embodiment.
FIG. 4(a) is a circuit diagram showing a hydraulic circuit of the shock absorber shown in FIG. 3. FIG. 4(b) is a diagram showing a flow of a working fluid at a time of compression in the circuit of FIG. 4(a). FIG. 4(c) is a diagram showing a flow of a working fluid at a time of extension in the circuit of FIG. 4(a).

In FIG. 3 and FIG. 4(a) to (c), parts corresponding to the parts shown in FIG. 1 and FIG. 2(a) to (c) are given the same reference signs as given on FIG. 1 and FIG. 2(a) to (c).

The shock absorber 10 of the second embodiment is different from that of the first embodiment in terms of the structure of the base valve part 16. The structures of the other parts are the same as those of the first embodiment.

The base valve part 16 has a plurality of fluid passage holes 16b and 16c. The plurality of fluid passage holes 16b and 16c penetrate through the base valve part 16 in the axial direction of the cylinder body 11. A step is formed on a surface of the base valve part 16 at the side close to the cap part 11b, so that the end of the fluid passage hole 16b at the side close to the cap part 11b is located closer to the cap part 11b than the end of the fluid passage hole 16c at the side close to the cap part 11b with respect to the axial direction of the cylinder body 11. A step is also formed on a surface of the base valve part 16 at the side close to the head part 11c, so that the end of the fluid passage hole 16c at the side close to the head part 11c is located closer to the head part 11c than the end of the fluid passage hole 16b at the side close to the head part 11c with respect to the axial direction of the cylinder body 11. Each of the number of the fluid passage holes 16b and the number of the fluid passage holes 16c may be one, or two or more.

The base valve part 16 is provided with the compression damping valve 32 for generating a compression damping force. The compression damping valve 32 includes a plurality of leaf valves. The compression damping valve 32 is in contact with, on the surface of the base valve part 16 at the side close to the cap part 11b, a part protruding toward the cap part 11b side. When the piston part 13 stops, the compression damping valve 32 closes a part (i.e., the fluid passage hole 16b) of the plurality of fluid passage holes 16b and 16c.

The base valve part 16 is provided with a second check valve 37. The second check valve 37 is an annular plate member. A biasing element 38 (such as a spring) presses the second check valve 37 against, on the surface of the base valve part 16 at the side close to the head part 11c, a part protruding toward the head part 11c side. When the piston part 13 stops, the second check valve 37 closes the rest (i.e., the fluid passage hole 16c) of the plurality of fluid passage holes 16b and 16c.

At a time of compression of the shock absorber 10, a working fluid contained in the second chamber 22 passes through the fluid passage hole 16b but does not pass through the fluid passage hole 16c. The working fluid passing through the fluid passage hole 16b causes the compression damping valve 32 to be bent toward the third chamber 23 side, to bring the fluid passage hole 16b and the third chamber 23 into communication with each other, and thus the working fluid flows into the third chamber 23. At this time, a portion at which the fluid passage hole 16b communicates with the third chamber 23 serves as an orifice. A flow passage resistance occurring at the orifice causes the compression damping valve 32 to generate a compression damping force.

At a time of extension of the shock absorber 10, a working fluid contained in the third chamber 23 passes through the fluid passage hole 16c but does not pass through the fluid passage hole 16b. The working fluid passing through the fluid passage hole 16c pushes open the second check valve 37 toward the second chamber 22 side, to bring the fluid passage hole 16c and the second chamber 22 into communication with each other, and thus the working fluid flows into the second chamber 22. Since a set load (initial load) of the biasing element 38 has been set to a small value, the second check valve 37 does not hinder a flow of the working fluid.

Flows of the working fluid in the compression stroke and the extension stroke of the shock absorber 10 of the second embodiment (see FIG. 4(b), (c)) are the same as those of the first embodiment (see FIG. 2(b), (c)), except that the working fluid flows from the third chamber 23 to the second chamber 22 via the second check valve 37 in the extension stroke (see FIG. 4(c)). Therefore, a description thereof is omitted herein.

The shock absorber 10 of the second embodiment is able to satisfy both the comfort in riding and the running performance at a higher level than conventional, with ensuring of the mountability to a vehicle.

In the shock absorber 10 of the second embodiment, the check valve 37 is provided to the base valve part 16. However, at least a portion of the base valve part 16 at the side closer to the cap part 11b is located in the internal space of the cap part 11b, and the outer diameter of the portion of the base valve part 16 located in the internal space of the cap part 11b is larger than the inner diameter of the cylinder part 11a. This allows an increase in the diameter of the compression damping valve 32, thus ensuring the circumferential length of the compression damping valve 32. As a result, the responsiveness of opening/closing of the compression damping valve 32 is improved.

### <Third Embodiment>

FIG. 5(a) is a circuit diagram showing a hydraulic circuit of a shock absorber according to a third embodiment. FIG. 5(b) is a diagram showing a flow of a working fluid at a time of compression in the circuit of FIG. 5(a). FIG. 5(c) is a diagram showing a flow of a working fluid at a time of extension in the circuit of FIG. 5(a).

In FIG. 5(a) to (c), parts corresponding to the parts shown in FIG. 1 and FIG. 2(a) to (c) are given the same reference signs as given on FIG. 1 and FIG. 2(a) to (c).

The shock absorber 10 of the third embodiment is different from that of the first embodiment, in that the first flow control valve 34 and the second flow control valve 36 are not provided. The structures of the other parts are the same as those of the first embodiment.

In the compression stroke of the shock absorber 10, similarly to the first embodiment, the following relationship is established:
the amount of volume decrease in the second chamber 22 = ΔP; and
the amount of volume increase in the first chamber 21 = ΔP-ΔR.

In the compression stroke, therefore, a working fluid whose amount corresponds to ΔP is discharged from the second chamber 22 to the outside of the second chamber 22 through the compression damping valve 32. In the shock absorber 10, the working fluid whose amount corresponds to ΔP contributes to generation of the compression damping force.

A working fluid whose amount corresponds to ΔP-ΔR flows into the first chamber 21 through the first check valve 33. The first check valve 33 causes no compression damping force. A working fluid whose amount corresponds to ΔR flows into the reservoir 15.

In the extension stroke of the shock absorber 10, similarly to the first embodiment, the following relationship is established:
the amount of volume decrease in the first chamber 21 = ΔP-ΔR; and
the amount of volume increase in the second chamber 22 = ΔP.

In the extension stroke, therefore, a working fluid whose amount corresponds to ΔP-ΔR flows from the first chamber 21 to the second chamber 22 through the extension damping valve 31. When the working fluid passes through the extension damping valve 31, the pressure in the first chamber 21 rises so that the extension damping force is generated. In the shock absorber 10, the working fluid whose amount corresponds to ΔP-ΔR contributes to generation of the extension damping force.

A working fluid whose amount corresponds to ΔR flows into the second chamber 22 through the second check valve 35. A flow of the working fluid passing through the second check valve 35 is a free flow. The second check valve 35 causes no extension damping force.

The shock absorber 10 of the third embodiment is also able to satisfy both the comfort in riding and the running performance at a higher level than conventional, with ensuring of the mountability to a vehicle.

The above-described valves 31 to 37 are illustrated by way of example in an embodiment. No particular limitation is put on the damping valve (the extension damping valve 31 and the compression damping valve 32), the check valve (the first check valve 33, the second check valve 35, and the second check valve 37), and the flow control valve (the first flow control valve 34 and the second flow control valve 36). A conventionally known configuration is adoptable.

As for the second check valve; in the first and third embodiments, the second check valve 35 is provided outside the internal space 20 of the cylinder body 11; and in the second embodiment, the second check valve 35 is provided outside the internal space 20 of the cylinder body 11 while the second check valve 37 is provided to the base valve part 16. Instead, it may be acceptable that the second check valve is provided to the base valve part 16 only.

An object to which the shock absorber 10 is mounted is not particularly limited, as long as the object is a vehicle. For example, the shock absorber 10 is suitable for use as a rear cushion of a saddle-ride type vehicle or a suspension of an automobile. No particular limitation is put on the saddle-ride type vehicle, and examples thereof include motorcycles, three-wheeled motor vehicles, and vehicles for off-road use (all-terrain vehicles). Examples of the motorcycle include scooters, mopeds, and sport type motorcycles.

While some preferred embodiments of the present invention have been thus far described, it is obvious that various changes and modifications can be made within the scope and the spirit of the present invention. The scope of the present invention is limited only by the accompanied claims.

### [DESCRIPTION OF THE REFERENCE SIGNS]

- 10: shock absorber
- 11: cylinder body
- 11a: cylinder part
- 11b: cap part
- 11c: head part
- 12: outer cylinder
- 13: piston part
- 13a: fluid passage hole
- 14: piston rod part
- 15: reservoir
- 16: base valve part
- 16a: fluid passage hole
- 20: internal space
- 21: first chamber
- 22: second chamber
- 23: third chamber
- 31: extension damping valve
- 32: compression damping valve
- 33: first check valve
- 34: first flow control valve
- 35: second check valve
- 36: second flow control valve
- 51 to 55: fluid passage

## Claims

1. A shock absorber (10) comprising:
a cylinder body (11) including a cylinder part (11a) having a cylindrical shape, a cap part (11b) that covers an opening of the cylinder part (11a) at one end thereof, and a head part (11c) that covers an opening of the cylinder part (11a) at the other end thereof, the cylinder body (11) having an internal space (20) defined by the cylinder part (11a), the cap part (11b), and the head part (11c);
a piston part (13) that partitions the internal space (20) of the cylinder body (11) such that the cylinder body (11) has a first chamber (21) and a second chamber (22), the first chamber (21) being configured to have a high pressure at a time of extension of the shock absorber (10), the second chamber (22) being configured to have a high pressure at a time of compression of the shock absorber (10);
a piston rod part (14) fixed to the piston part (13), the piston rod part (14) extending through the head part (11c) to the outside of the cylinder body (11); and
a base valve part (16) arranged in the internal space (20) of the cylinder body (11), the base valve part (16) being positioned at a side close to the cap part (11b) relative to the piston part (13),
the piston part (13) being provided with an extension damping valve (31) for generating an extension damping force, the extension damping valve (31) being configured to permit a working fluid flowing from the first chamber (21) toward the second chamber (22) to flow only in a single direction,
the base valve part (16) being provided with a compression damping valve (32) for generating a compression damping force, the compression damping valve (32) being configured to permit a working fluid flowing from the second chamber (22) toward the cap-part side of the base valve part (16) to flow only in a single direction,
a first check valve (33) being not provided in the piston part (13) but provided outside the internal space (20) of the cylinder body (11), the first check valve (33) being configured to permit a working fluid flowing into the first chamber (21) in a compression stroke to flow only in a single direction,
a second check valve (35) being provided in at least one of the base valve part (16) and the outside of the internal space (20) of the cylinder body (11), the second check valve (35) being configured to permit a working fluid flowing into the second chamber (22) in an extension stroke to flow only in a single direction.

2. The shock absorber (10) according to claim 1, wherein
the second check valve (35), a first flow control valve (34) and a second flow control valve (36) are provided outside the internal space (20) of the cylinder body (11),
the first flow control valve (34) is arranged in parallel with the first check valve (33),
the second flow control valve (36) is arranged in parallel with the second check valve (35).

3. The shock absorber (10) according to claim 2, wherein
the first flow control valve (34) and the second flow control valve (36) are electronically-controlled flow control valves.

4. The shock absorber (10) according to any one of claims 1 to 3, wherein
the cap part (11b) is a cylindrical member, the cap part (11b) having an open end at a side close to the cylinder part (11a) and a closed end at a side opposite to the cylinder part (11a),
at least the cap-part-side portion of the base valve part (16) is arranged in an internal space of the cap part (11b),
the outer diameter of the portion of the base valve part (16) arranged in the internal space of the cap part (11b) is larger than the inner diameter of the cylinder part (11a).

5. The shock absorber (10) according to claim 4, wherein
the outer diameter of the compression damping valve (32) is larger than the inner diameter of the cylinder part (11a).
